(19) Europäisches Patentamt
European Patent Office
Office européen des brevets

(11) **EP 1 241 509 A2**

(12) **EUROPEAN PATENT APPLICATION**

(43) Date of publication:
**18.09.2002 Bulletin 2002/38**

(51) Int Cl.⁷: **G02B 26/12**, H04N 1/113

(21) Application number: **02251905.2**

(22) Date of filing: **18.03.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **16.03.2001 JP 2001076163**<br><br>(71) Applicant: **Ricoh Company, Ltd.**<br>**Tokyo 143-8555 (JP)** | (72) Inventor: **Tokunaga, Atsuo**<br>**Ohta-ku , Tokyo 143-8555 (JP)**<br><br>(74) Representative: **Lamb, Martin John Carstairs**<br>**MARKS & CLERK,**<br>**57-60 Lincoln's Inn Fields**<br>**London WC2A 3LS (GB)** |

(54) **Method and apparatus for image forming with dual optical scanning systems**

(57) An optical scanning apparatus includes two light sources, two beam shaping mechanisms, a light deflector, and two scanning beam focusing mechanisms. The light source emits a light beam. The beam shaping mechanism shapes the light beam. The light deflector deflects each light beam in a continuously changing direction so as to convert each light beam into a scanning light beam. The scanning beam focusing mechanism brings the scanning light beam to a focus on a photoconductive surface, and satisfies an equation of $\Delta L\cos\alpha > R/2$ at a junction of the scanning light beam with the other scanning light beam on the photoconductive surface, wherein $\Delta L$ represents an inherent light pass length variation, $\alpha$ represents an incident angle, and R represents an inherent marginal distance.

## FIG. 1

EP 1 241 509 A2

## Description

The invention relates to a method and apparatus for image forming, and more particularly to a method and apparatus for image forming that uses dual optical scanning systems.

Image forming apparatus including copying machines, laser printers, etc. are rapidly being subjected to digitalization. There has also been a move towards wide format image forming apparatus capable of handling A1 sheets, or A0 sheets, for example. Consequently, the demand for a high image quality from a wide format image forming apparatus is increasing. At present, optical writing apparatus using an LED (light-emitting diode) is the main approach for digital copying machines capable of handling a wide format such as A1, A0, etc. In comparison to optical writing apparatus using a laser beam scanning method, optical writing apparatus using an LED is generally high in cost and is rather inferior in quality.

However, for the purpose of laser scanning over an A0 width, various factors such as light lengths, sizes of lenses, reflection mirrors having long lengths, etc. lead to problems such as the upsizing of units and increasing cost. As attempts to solve the problems above, various techniques have been developed in which two optical scanning systems are adjoined in a main scanning direction to obtain a wide scanning capability.

For example, attempts to provide an optical writing apparatus for a wide format by using two optical scanning systems including two polygon mirrors are described in Japanese unexamined patent publications, No. 61-11720, No. 62-169575, and No. 6-208066. The first and second attempts use a method of adjoining two scanning lines that scan in the same direction and require a synchronization between the rotations of the two polygon mirrors to justify positions of the scanning lines in the sub-scanning direction. The third attempt controls two scanning lines to begin from the center of the scanning width towards different ends in the main scanning direction by rotating the two polygon mirrors in different directions from each other; one in a forward direction and the other in a reverse direction.

Another attempt is described in Japanese unexamined patent publication, No. 8-72308, in which two polygon mirrors are rotated with a single driving source. This attempt also employs an optical scanning method in which two beams are directed at different surfaces of a single polygon mirror and the two scanning beams are adjoined in the main scanning direction with a common optical focusing system.

Further, Japanese unexamined patent publications, No.9-5655 and No. 9-127440, describe other optical scanning apparatuses which use two or more polygon mirrors and two or more optical focusing systems.

Further, Japanese unexamined patent publication, No. 2000-187171, describes an optical scanning apparatus in which two light beams are deflected with a common polygon mirror.

However, the above-mentioned systems experience a problem in which two scanning lines are not precisely matched in a sub-scanning direction at the starting positions.

The invention provides a novel optical scanning apparatus. In one embodiment, this novel optical scanning apparatus includes at least two light sources, at least two beam shaping mechanisms, a light deflector, and at least two scanning beam focusing mechanisms. Each of the two light sources is arranged and configured to emit a light beam. Each of the two beam shaping mechanisms is arranged and configured to shape the light beam. The light deflector is arranged and configured to deflect each light beam in a continuously changing direction so as to convert each light beam into a scanning light beam. Each of the two scanning beam focusing mechanisms is arranged and configured to bring the scanning light beam to a focus on a photoconductive surface. Each of the two scanning beam focusing mechanisms satisfies an equation of $\Delta L \cos\alpha > R/2$ at a junction of the scanning light beam with the other scanning light beam on the photoconductive surface, wherein $\Delta L$ represents an inherent light pass length variation, $\alpha$ represents an incident angle, and R represents an inherent marginal distance.

Each of the two scanning beam focusing mechanisms may include a telecentric f$\theta$ lens system or a telecentric f$\theta$ mirror system.

The invention further provides a novel method of optical scanning. In one embodiment, this novel method includes the steps of emitting, shaping, deflecting, and bringing. The emitting step emits at least two light beams. The shaping step shapes the at least two light beams. The deflecting step deflects each of the at least two light beams in a continuously changing direction so as to convert each of the at least two light beams into a scanning light beam. The bringing step brings the scanning light beam to a focus on a photoconductive surface with at least two scanning beam focusing mechanisms each of which satisfies an equation of $\Delta L \cos\alpha > R/2$ at a junction of the scanning light beam with the other scanning light beam on the photoconductive surface, wherein $\Delta L$ represents an inherent light pass length variation, $\alpha$ represents an incident angle, and R represents an inherent marginal distance.

The two scanning beam focusing mechanisms may include a telecentric f$\theta$ lens system or a telecentric f$\theta$ mirror system.

The invention also provides a novel image forming apparatus. In one embodiment, this novel image forming apparatus includes a photoconductive member and an optical scanning apparatus. The optical scanning apparatus includes at least two light sources, at least two beam shaping mechanisms, a light deflector, and at least two scanning beam focusing mechanisms. Each of the two light sources is arranged and configured to emit a light beam. Each of the two beam shaping mechanisms is arranged and configured to shape the light beam. The light deflector is arranged and configured to deflect each light beam in a continuously changing direction so as to convert each light beam into a scanning light beam. Each of the two scanning beam focusing mechanisms is arranged and configured to bring the scanning light beam to a focus on a surface of the photoconductive member and satisfies an equation of $\Delta L\cos\alpha > R/2$ at a junction of the scanning light beam with the other scanning beam on the surface of the photoconductive member, wherein $\Delta L$ represents an inherent light pass length variation, $\alpha$ represents an incident angle, and R represents an inherent marginal distance.

Each of the two scanning beam focusing mechanisms may include a telecentric $f\theta$ lens system or a telecentric $f\theta$ mirror system.

The invention further provides a novel method of image forming. In one embodiment, this novel method includes the steps of charging, emitting, shaping, deflecting, and bringing. The charging step charges a surface of a photoconductive member. The emitting step emits at least two light beams. The shaping step shapes the at least two light beams. The deflecting step deflects each of the at least two light beams in a continuously changing direction so as to convert each of the at least two light beams into a scanning light beam. The bringing step brings the scanning light beam to a focus on the surface of the photoconductive member with at least two scanning beam focusing mechanisms each of which satisfies an equation of $\Delta os\alpha R/2$ at a junction of the scanning light beam with the other scanning light beam on the photoconductive surface, wherein $\Delta$ represents an inherent light pass length variation, $\alpha$ represents an incident angle, and R represents an inherent marginal distance.

Each of the two scanning beam focusing mechanisms may include a telecentric $f\theta$ lens system or a telecentric $f\theta$ mirror system.

A more complete appreciation of the invention and many of the attendant advantages thereof will be readily obtained as the same becomes better understood by reference to the following detailed description when of prefrred embodiments of the invention considered in connection with the accompanying drawings, wherein:

Fig. 1 is a schematic diagram of an optical scanning apparatus according to a preferred embodiment;
Figs. 2 and 3 are illustrations for explaining a difference between optical lens systems using a telecentric $f\theta$ lens and a wide-angle lens;
Fig. 4 is a schematic diagram of an optical scanning apparatus according to another preferred embodiment; and
Fig. 5 is a schematic diagram of an image forming apparatus that employs the optical scanning system of Fig. 1 or Fig. 4.

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. Referring now to the drawings, wherein like reference numerals designate identical or corresponding parts throughout the several views, a description is made of an optical scanning apparatus according to a preferred embodiment of the present invention and an image forming apparatus arranged with the above-mentioned optical scanning apparatus.

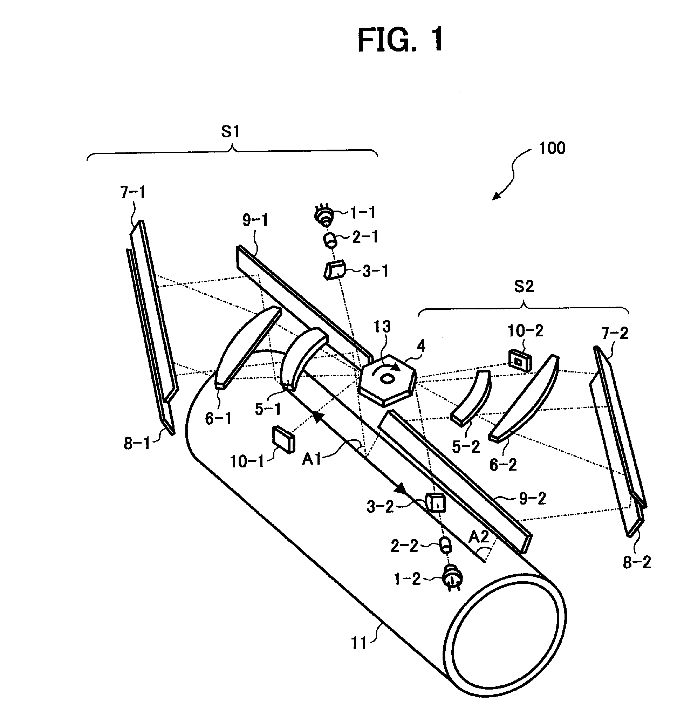

Fig. 1 illustrates an optical scanning apparatus 100 according to a preferred embodiment of the present invention. The optical scanning apparatus 100 includes two optical scanning systems S1 and S2. As illustrated in Fig. 1, the optical scanning system S1 includes a light source 1-1, a collimate lens 2-1, a cylindrical lens 3-1, a first $f\theta$ (ef theta) lens 5-1, a second $f\theta$ (ef theta) lens 6-1, a first mirror 7-1, and a second mirror 8-1, a third mirror 9-1, and a synchronous beam detector 10-1. Likewise, the optical scanning system S2 includes a light source 1-2, a collimate lens 2-2, a cylindrical lens 3-2, a first $f\theta$ (ef theta) lens 5-2, a second , wherein said modified address comprises a network address $f\theta$ (ef theta) lens 6-2, a first mirror 7-2, and a second mirror 8-2, a third mirror 9-2, and a synchronous beam detector 10-2. In describing the optical scanning systems S1 and S2, a reference numeral before a hyphen indicates a component and a reference numeral (i.e., 1 or 2) after a hyphen indicates whether the component belongs to the optical scanning system S1 or S2. For example, the light sources 1-1 and 1-2 are identical as a component but the light source 1-1 belongs to the system S1 and the light source 1-2 belongs to the optical scanning system S2. The optical scanning apparatus 100 further includes a polygon mirror 4 which is used by both the optical scanning systems S1 and S2. In Fig. 1, reference numeral 11 denotes a photoconductive member.

The light sources 1-1 and 1-2 emit light beams. The light sources 1-1 and 1-2 may be a laser diode for emitting a laser beam, a laser diode array for emitting a plurality of laser beams, a device of a laser diode combined with an optical device for emitting a plurality of laser beams, or the like. The collimate lenses 2-1 and 2-2 are a lens for collimating a light beam and are arranged at positions to pass the light beams emitted by the light sources 1-1 and 1-2, respectively. The cylindrical lenses 3-1 and 3-2 are for gathering diverging rays in one direction into an intensive light beam and are arranged at positions so that the light beams passing through the collimate lenses 2-1 and 2-2, respectively, impinge on the polygon mirror 4 that is referred to as a light deflecting mechanism and includes a plurality of deflecting surfaces for deflecting light beams. The polygon mirror 4 is rotated by a driving mechanism such as a motor (not shown) at a predetermined speed so that the deflecting surfaces continuously change their angles relative to the incident light beams. Thereby, the light beams become scanning light beams. The first fθ lenses 5-1 and 5-2 have a predetermined width to receive the above-mentioned scanning light beams deflected by the polygon mirror 4, and the second fθ lenses 6-1 and 6-2 have a predetermined width to receive the scanning light beams passing through the first fθ lenses 5-1 and 5-2. The first fθ lens 5-1 and the second fθ lens 6-1 are referred to as a scanning beam focusing mechanism for the optical scanning system S1 and the first fθ lens 5-2 and the second fθ lens 6-2 are referred to as a scanning beam focusing mechanism for the optical scanning system S2. In the optical scanning system S1, the first, second, and third mirrors 7-1, 8-1, and 9-1 are arranged at positions to reflect in turn the scanning light beam transmitted from the second fθ lens 6-1 to a surface of the photoconductive member 11. In the optical scanning system S2, the first, second, and third mirrors 7-2, 8-2 and 9-2 are arranged at positions to reflect in turn the scanning light beam transmitted from the second fθ lens 6-2 to a surface of the photoconductive member 11.

In the optical scanning system S1, the light source 1-1 is driven by a driving control mechanism (not shown) to emit a light beam that is modulated in accordance with an image signal. The light beam is collimated and sharpened with the collimate lens 2-1 and the cylindrical lens 3-1, and is converted into a scanning light beam with the rotating surfaces of the polygon mirror 4. The scanning light beam which is a light beam running at a constant angular speed is converted into a scanning light beam that runs at a constant speed with the first and second fθ lenses 5-1 and 6-1. The travel direction of the scanning light beam running at the constant speed is changed with the first and second mirrors 7-1 and 8-1, and is finally directed to the surface of the photoconductive member 11 with the third mirror 9-1. Consequently, the scanning light beam starts scanning from a predetermined central position towards one end portion of the surface of the photoconductive member 11.

The optical scanning system S2 having a structure similar to that of the optical scanning system S1 and is situated at a position rotated about the polygon mirror 4 by 180 degrees from a position of the optical scanning system S1. In this optical scanning system S2, the light source 1-2 is driven by a light source driving controller (not shown) to emit a light beam that is modulated in accordance with an image signal. The light beam is collimated and sharpened with the collimate lens 2-2 and the cylindrical lens 3-2, and is converted into a scanning light beam with the rotating surfaces of the polygon mirror 4. The scanning light beam which is a light beam running at a constant angular speed is converted into a scanning light beam that runs at a constant speed with the first and second fθ lenses 5-2 and 6-2. The travel direction of the scanning light beam running at the constant speed is changed with the first and second mirrors 7-2 and 8-2, and is finally directed to the surface of the photoconductive member 11 with the third mirror 9-2. Consequently, the scanning light beam starts scanning from a predetermined central position towards the other end portion of the surface of the photoconductive member 11.

The synchronous beam detectors 10-1 and 10-2 are arranged outside areas of passages for the light beams covered by the respective deflecting mechanisms so as to detect each light beam at its beginning. Based on this detection, an image writing controller (not shown) determines a scanning start position each time of scanning and controls a time to start image writing on the surface of the photoconductive member 11.

In the way as described above, the optical scanning apparatus 100 of Fig. 1 controls the optical scanning systems S1 and S2 in a manner such that the light beams modulated in accordance with image information scan from the predetermined central positions towards the respective ends of the surface of the photoconductive member 11.

In this example, the optical scanning systems S1 and S2 employs a telecentric optical system to attain an incident angles A1 and A2 of approximately 90 degrees which are respectively formed between the light beams and the surface of the photoconductive member 4 in the scanning direction in an effective writing area.

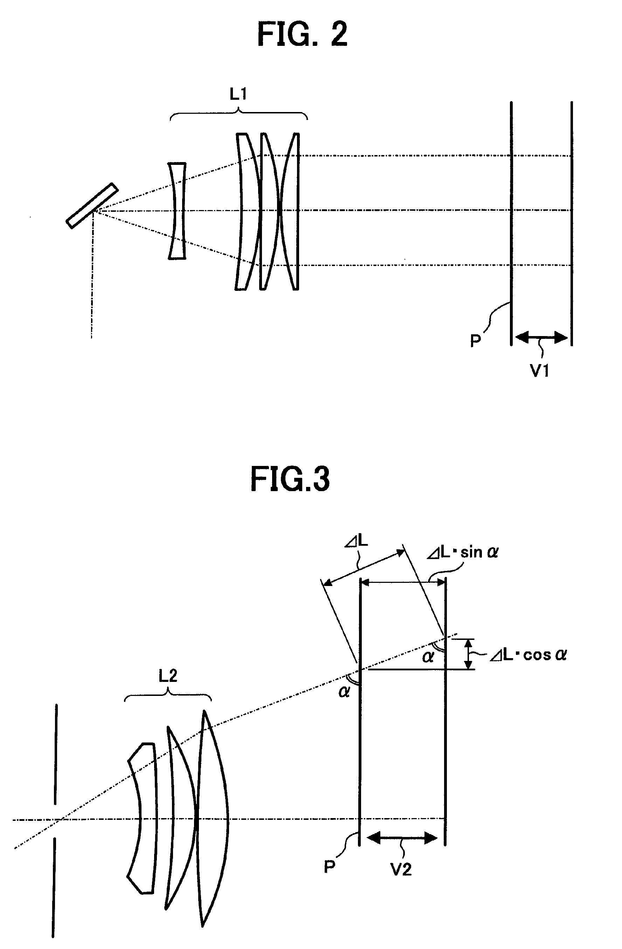

Fig. 2 illustrates one example of a telecentric fθ lens system L1 that can be applied to the scanning beam focusing mechanism of the optical scanning apparatus 100 of Fig 1. In the telecentric fθ lens system of Fig. 2, the entire light rays of a light beam are directed to a photoconductive surface P in a direction normal to the photoconductive surface P. Therefore, the image focused on the photoconductive surface P is not changed when the path length of the light rays is changed by, for example, a movement of the photoconductive surface P by a distance V1, as illustrated in Fig. 2.

In comparison to this, a wide-angle fθ lens system L2 of Fig. 3 focuses an image on the photoconductive surface P with a light ray having an incident angle α which is continuously reduced from 90 degrees as the light ray goes outside the center in the main scanning direction. Therefore, the image focused on the photoconductive surface P is changed when the path length of the light ray is changed by, for example, a movement of the photoconductive surface P by a distance V2, as illustrated in Fig. 3. This causes a change of a space between pixels in the sub-scanning direction, and the change is continuously increased as the light ray goes outside the center in the main scanning direction or as the photoconductive surface P is moved away from the wide-angle lens system L2.

Therefore, it is understood that a scanning beam focusing mechanism using the telecentric fθ lens system suffers from movement of an photoconductive surface far less than the one using the wide-angle fθ lens system.

In addition, the optical scanning systems S1 and S2 may cause variations of the scanning position at a junction where the scanning by the light beams of the optical scanning systems S1 and S2 are adjoined. Incident angles of the light beams passing through the optical scanning systems S1 and S2 have opposite phases to each other and consequently the variations of the scanning position is an added amount of the variations of the scanning positions produced by the optical scanning systems S1 and S2. Therefore, the degree of variation of the scanning position at the junction needs to be within a half amount of a marginal distance R, which is the minimum distance allowable between two adjacent pixels and is inherent to each optical scanning system.

An optical scanning system has the inherent marginal distance R and a light pass length variation $\Delta L$, which is also inherent to the optical scanning system. Accordingly, an optical scanning apparatus using an optical scanning system has an inherent marginal distance R and an inherent light pass length variation $\Delta L$. To satisfy a required performance, an optical scanning apparatus may need to have a mechanism for reducing the variations of the light pass length or correcting for displacement at the junction in accordance with the variations of the light pass length, or to fulfil an equation among the light pass length variation $\Delta L$, the incident angle $\alpha$ at the junction, and the marginal distance R, as follows;

$$\Delta L \cos\alpha > R/2.$$

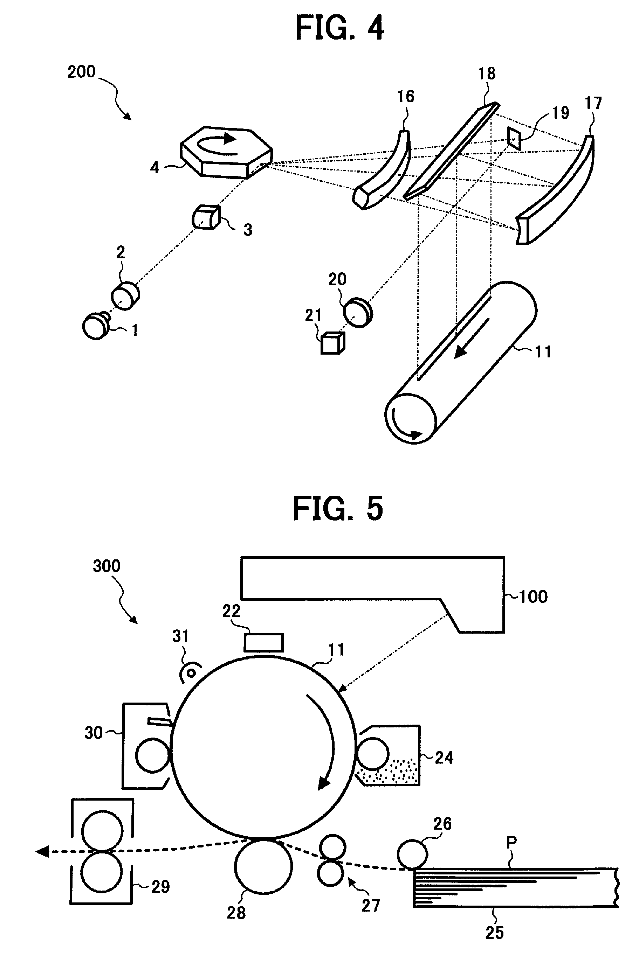

Next, another exemplary optical scanning apparatus 200 according to another preferred embodiment is described with reference to Fig. 4. The optical scanning apparatus 200 of Fig. 4 uses a telecentric fθ, wherein said modified address comprises a network address lens system and includes the light source 1, the collimate lens 2, the cylindrical lens 3, and the polygon mirror 4, which are identical to those components described in the optical scanning apparatus 100. The optical scanning apparatus 200 further includes an eccentric toric lens 16, a telecentric fθ mirror 17, a mirror 18, a synchronous beam detector 19, a light gathering lens 20, and a SOS-type (silicon on sapphire type) sensor 21.

In the optical scanning apparatus 200, an entire rays of a scanning light beam are directed to the surface of the photoconductive member 11 in a direction normal to the surface of the photoconductive member 11 with the telecentric fθ mirror 17. Therefore, the optical scanning apparatus 200 suffers little from movement of an object surface as in the case of the scanning beam focusing mechanism using the telecentric fθ lens system. That is, an optical lens system using the telecentric fθ mirror 17 can be used in the optical scanning apparatus 100 as an alternative to the telecentric fθ lens system.

In general, a telecentric fθ lens is composed of a glass lens and has an advantage of a small thermal sensitivity and a consequent high-precision capability, and a telecentric fθ mirror advantageously has a space-saving capability by a combination with an aspheric lens.

While the discussion for the two optical scanning systems implemented in one optical scanning apparatus has referred to the exemplary structure, as illustrated in Fig. 1, it should be clear that the disclosure applies to other structures that has been developed for adjoining two scanning light beams.

Fig. 5 illustrates an exemplary structure of an image forming apparatus 300 that includes the optical scanning apparatus 100. As illustrated in Fig. 5, the image forming apparatus further includes the photoconductive member 11, a charge member 22, a development unit 24, a recording sheet cassette 25, a sheet feed roller 26, a registration roller 27, a transfer roller 28, a fixing unit 29, a cleaning unit 30, and a discharger 31. The charge member 22 evenly charges the surface of the photoconductive member 11 on which an electrostatic latent image is drawn by the scanning light beams generated by the optical scanning apparatus 100. The development unit 24 develops the electrostatic latent image formed on the photoconductive member 11 with toner into a visual toner image. The recording sheet cassette 25 contains a plurality of recording sheets. The sheet feed roller 26 picks up and transfers a recording sheet from the recording sheet cassette 26. The registration roller 27 stops and transfers the recording sheet transferred by the sheet feed roller 26 in synchronism with a rotation of the photoconductive member 11 carrying the toner image. The transfer unit 28 transfer the toner image carried on the photoconductive member 11 onto the recording sheet and further transfers the recording sheet carrying the toner image. The fixing unit 29 fixes the toner image with heat and/or pressure onto the recording sheet. The cleaning unit 30 removes the residual toner from the surface of the photoconductive member 11 after the toner image is transferred to the recording sheet by the transfer unit 28. The discharger 31 discharges residual charges on the surface of the photoconductive member 11 after the residual toner is removed from the surface of the photoconductive member 11 by the cleaning unit 30.

In the thus-structured image forming apparatus 300, an electrostatic latent image is formed with the scanning light beams emitted by the optical scanning apparatus 100 on the evenly charged surface of the photoconductive member 11. In synchronism with a rotation of the photoconductive member 11, a recording sheet is transferred to the transfer roller 28 by the registration roller 27 after being picked up and fed from the recording sheet cassette 25 by the sheet feed roller 26. Then, the toner image is transferred from the photoconductive member 11 to the recording sheet which is then forwarded to the fixing unit 29. The toner image is fixed onto the recording sheet with heat and/or pressure and is ejected outside the image forming apparatus 300.

Accordingly, the image forming apparatus 300 can produce an image in a relatively high quality with the optical scanning apparatus 100 that eliminates the above-mentioned problem of displacement at the junction point caused by variations of the light passage length and that is produced in a relatively low cost and a compact design.

As an alternative to the optical scanning apparatus 100, the image forming apparatus 300 may include the optical scanning apparatus 200.

Numerous additional modifications and variations are possible in light of the above teachings. It is therefore to be understood that within the scope of the appended claims, the disclosure of this patent specification may be practiced otherwise than as specifically described herein.

This patent specification is based on Japanese patent application, No. JPAP2001-076163 filed on March 16, 2001, in the Japanese Patent Office, the entire contents of which are incorporated by reference herein.

**Claims**

1. An optical scanning apparatus, comprising:

   at least two light sources each arranged and configured to emit a light beam;
   at least two beam shaping mechanisms each arranged and configured to shape the light beam;
   a light deflector arranged and configured to deflect each light beam in a continuously changing direction so as to convert each light beam into a scanning light beam; and
   at least two scanning beam focusing mechanisms each arranged and configured to bring the scanning light beam to a focus on a photoconductive surface, each of said at least two scanning beam focusing mechanisms satisfying an equation of $\Delta L\cos\alpha > R/2$ at a junction of the scanning light beam with the other scanning light beam on the photoconductive surface, wherein $\Delta L$ represents an inherent light pass length variation, $\alpha$ represents an incident angle, and R represents an inherent marginal distance.

2. An optical scanning apparatus as defined in Claim 1, wherein each of said at least two scanning beam focusing mechanisms includes a telecentric f$\theta$ lens system.

3. An optical scanning apparatus as defined in Claim 1, wherein each of said at least two scanning beam focusing mechanisms includes a telecentric f$\theta$ mirror system.

4. An optical scanning apparatus, comprising:

   at least two light source means each for emitting a light beam;
   at least two beam shaping means each for shaping the light beam;
   light deflecting means for deflecting each light beam in a continuously changing direction so as to convert each light beam into a scanning light beam; and
   at least two scanning beam focusing means each for bringing the scanning light beam to a focus on a photoconductive surface, each of said at least two scanning beam focusing means satisfying an equation of $\Delta L\cos\alpha > R/2$ at a junction of the scanning light beam with the other scanning light beam on the photoconductive surface, wherein $\Delta L$ represents an inherent light pass length variation, $\alpha$ represents an incident angle, and R represents an inherent marginal distance.

5. An optical scanning apparatus as defined in Claim 4, wherein each of said at least two scanning beam focusing means includes a telecentric f$\theta$ lens system.

6. An optical scanning apparatus as defined in Claim 4, wherein each of said at least two scanning beam focusing means includes a telecentric f$\theta$ mirror system.

7. A method of optical scanning, comprising the steps of:

   emitting at least two light beams;
   shaping said at least two light beams;
   deflecting each of said at least two light beams in a continuously changing direction so as to convert each of said at least two light beams into a scanning light beam; and
   bringing the scanning light beam to a focus on a photoconductive surface with at least two scanning beam focusing mechanisms each of which satisfies an equation of $\Delta L\cos\alpha > R/2$ at a junction of the scanning light beam with the other scanning light beam on the photoconductive surface, wherein $\Delta L$ represents an inherent light pass length variation, $\alpha$ represents an incident angle, and R represents an inherent marginal distance.

8. A method as defined in Claim 7, wherein each of said at least two scanning beam focusing mechanisms includes a telecentric fθ lens system.

9. A method as defined in Claim 7, wherein each of said at least two scanning beam focusing mechanisms includes a telecentric fθ mirror system.

10. An image forming apparatus, comprising:

a photoconductive member; and
an optical scanning apparatus that comprises:

at least two light sources each arranged and configured to emit a light beam;
at least two beam shaping mechanisms each arranged and configured to shape the light beam;
a light deflector arranged and configured to deflect each light beam in a continuously changing direction so as to convert each light beam into a scanning light beam; and
at least two scanning beam focusing mechanisms each arranged and configured to bring the scanning light beam to a focus on a surface of said photoconductive member, each of said at least two scanning beam focusing mechanisms satisfying an equation of $\Delta L\cos\alpha > R/2$ at a junction of the scanning light beam with the other scanning beam on the surface of said photoconductive member, wherein $\theta L$ represents an inherent light pass length variation, $\alpha$ represents an incident angle, and R represents an inherent marginal distance.

11. An image forming apparatus as defined in Claim 10, wherein each of said at least two scanning beam focusing mechanisms includes a telecentric fθ lens system.

12. An image forming apparatus as defined in Claim 10, wherein each of said at least two scanning beam focusing mechanisms includes a telecentric fθ mirror system.

13. An image forming apparatus, comprising:

photoconductive means for being photoconductive; and
an optical scanning apparatus that comprises:

at least two light source means each for emitting a light beam;
at least two beam shaping means each for shaping the light beam;
light deflecting means for deflecting each light beam in a continuously changing direction so as to convert each light beam in-

to a scanning light beam; and
at least two scanning beam focusing means each for bringing the scanning light beam to a focus on a surface of said photoconductive means, each of said at least two scanning beam focusing means satisfying an equation of $\Delta L\cos\alpha > R/2$ at a junction of the scanning light beam with the other scanning light beam on the surface of said photoconductive means, wherein $\Delta L$ represents an inherent light pass length variation, $\alpha$ represents an incident angle, and R represents an inherent marginal distance.

14. An image forming apparatus as defined in Claim 13, wherein each of said at least two scanning beam focusing means includes a telecentric fθ lens system.

15. An image forming apparatus as defined in Claim 13, wherein each of said at least two scanning beam focusing means includes a telecentric fθ mirror system.

16. A method of image forming, comprising the steps of:

charging a surface of a photoconductive member;
emitting at least two light beams;
shaping said at least two light beams;
deflecting each of said at least two light beams in a continuously changing direction so as to convert each of said at least two light beams into a scanning light beam; and
bringing the scanning light beam to a focus on the surface of the photoconductive member with at least two scanning beam focusing mechanisms each of which satisfies an equation of $\Delta L\cos\alpha > R/2$ at a junction of the scanning light beam with the other scanning light beam on the photoconductive surface, wherein $\Delta L$ represents an inherent light pass length variation, $\alpha$ represents an incident angle, and R represents an inherent marginal distance.

17. A method as defined in Claim 16, wherein each of said at least two scanning beam focusing mechanisms includes a telecentric fθ lens system.

18. A method as defined in Claim 16, wherein each of said at least two scanning beam focusing mechanisms includes a telecentric fθ mirror system.

# FIG. 1

# FIG. 2

# FIG.3

# FIG. 4

# FIG. 5